Europäisches Patentamt

European Patent Office

Office européen des brevets

(11) Veröffentlichungsnummer: **0 072 372**
**A1**

(12) **EUROPÄISCHE PATENTANMELDUNG**

(21) Anmeldenummer: 81106428.6

(22) Anmeldetag: 19.08.81

(51) Int. Cl.³: **F 16 L 39/00**
**F 16 L 23/00**

(43) Veröffentlichungstag der Anmeldung:
23.02.83 Patentblatt 83/8

�}Benannte Vertragsstaaten:
AT BE CH DE FR GB IT LI LU NL SE

(71) Anmelder: Schulz & Co. KG
Kuhleshütte 85
D-4150 Krefeld 13(DE)

(72) Erfinder: Kost, Wolfgang, Dr. Ing.
Marbacherstrasse 22
D-6700 Ludwigshafen(DE)

(72) Erfinder: Popp, Hermann, Dipl.-Ing.
Dr. Gross-Ring 6
D-6715 Lampsheim(DE)

(72) Erfinder: Schulz, Wilhelm
Sebastianstrasse 14
D-4150 Krefeld(DE)

(74) Vertreter: Patentanwältsburo Cohausz & Florack
Schumannstrasse 97
D-4000 Düsseldorf 1(DE)

(54) Flansch.

㊼ Die Erfindung betrifft einen Flansch für den Anschluß an beheizte oder gekühlte Rohrleitungen, Behälter, Armaturen, Schaugläser und dergleichen. Er besteht aus einem mit einem Innenrohrstutzen und einem dazu konzentrischen Außenrohrstutzen verbundenen Flanschring mit auf einem Teilkreis angeordneten Löchern für den Durchtritt von Befestigungsschrauben und axialen Durchtrittsöffnungen für Heiz- oder Kühlmedium in dem über dem Außenrohrstutzen radial nach außen vorstehenden Abschnitt des Flanschrings. Dabei ist jede Durchtrittsöffnung mit einer in derselben Radialebene liegenden Durchbrechung in dem am Flanschring gelegenen Ende des Außenrohrstutzens unter Bildung eines auf der zur Dichtfläche rückwärtigen Fläche des Flanschrings gelegenen Kanals verbunden. In die Dichtfläche des Flanschrings ist eine Entlastungsnut eingearbeitet, in die Bohrungen durch den Flanschring münden. Erfindungsgemäß sind Bohrungen für Befestigungsschrauben auf zwei konzentrischen Teilkreisen angeordnet, und die Durchtrittsöffnungen für Heiz- oder Kühlmedium sind auf dem äußeren Teilkreis und die Entlastungsnut sowie die von ihr ausgehenden Bohrungen durch den Flanschring entlang des inneren Teilkreises gelegen.

Fig.1

# COHAUSZ & FLORACK
## PATENTANWALTSBÜRO
SCHUMANNSTR. 97 · D-4000 DÜSSELDORF

Telefon: (0211) 683346      Telex: 0858 6513 cop d

PATENTANWALTE:

Dipl.-Ing. W. COHAUSZ · Dipl.-Ing. R. KNAUF · Dipl.-Ing. H. B. COHAUSZ · Dipl.-Ing. D. H. WERNER

## Flansch

Die Erfindung betrifft einen Flansch für den Anschluß
an beheizte oder gekühlte Rohrleitungen, Behälter, Armaturen, Schaugläser und dergleichen, bestehend aus einem
mit einem Innenrohrstutzen und einem dazu konzentrischen
Außenrohrstutzen verbundenen Flanschring mit auf einem
Teilkreis angeordneten Löchern für den Durchtritt von
Befestigungsschrauben und axialen Durchtrittsöffnungen
für Heiz- oder Kühlmedium in dem über den Außenrohrstutzen
radial nach außen vorstehenden Abschnitt des Flanschrings.
Dabei ist jede Durchtrittsöffnung mit einer in derselben
Radialebene liegenden Durchbrechung in dem am Flanschring gelegenen Ende des Außenrohrstutzens unter Bildung
eines auf der zur Dichtfläche rückwärtigen Fläche des
Flanschrings gelegenen Kanals verbunden.

35 176

W/w.

Zur Heizung oder Kühlung produktführender Rohrleitungen
werden unter anderem Doppelrohre, welche in der Regel
konzentrisch zueinander angeordnet sind, eingesetzt, wobei das temperatursteuernde Medium den Ringraum zwischen
Innen- und Außenrohr durchströmt. Flanschverbindungen
innerhalb dieser Systeme werden durch Umführungen überbrückt. Diese Umführungen benötigen innerhalb eines Rohrsystems viel Platz, außerdem sind sie nur mit erheblichen
Kosten herzustellen und verursachen infolge der vielen
Umlenkungen Druckverluste im System, so daß häufig neue
Einspeisungsstellen mit den dazugehörigen Armaturen auf
einer kurzen Rohrstrecke hergestellt werden müssen. Das
führt zu einer weiteren nicht unerheblichen Kostensteigerung.

Ausführungen der eingangs genannten Gattung, die das Heiz-
bzw. Kühlmedium direkt durch den Flansch weiterleiten,
sind z.B. aus der DE-OS 15 25 925 bekannt. Befriedigende
Ergebnisse konnten jedoch mit diesen Flanschen nicht erreicht werden, weil die gesamte zur Verfügung bleibende
Dichtungsbreite infolge der in die Dichtfläche eingearbeiteten Entlastungsnut zu gering ist. Ein Dichthalten der
Flanschverbindung war nur durch den Einsatz sehr teurer
Spezialdichtungen in Verbindung mit einer sehr sorgfältigen Montage, welche im allgemeinen Rohrleitungsbau
nicht immer möglich ist, zu gewährleisten. Nachteilig bei
den bekannten gattungsmäßigen Flanschen ist ferner, daß
die Befestigungsschrauben zu weit von dem durch die Entlastungsnut unterteilten Dichtbereich entfernt liegen. Dadurch ist dieser Dichtbereich zu schmal ausgestaltet,
so daß es eher möglich ist, daß aus dem Innenrohr
Produkt bzw. aus dem Ringraum zwischen Innen- und Außenrohr Heiz- oder Kühlmedium austritt, wobei die zusätzliche Gefahr einer Vermischung beider Medien gegeben
ist. So kann die Entlastungsnut ihre Funktion, bei Leckage austretendes Produkt und/oder Heiz- oder Kühlmedium durch
die mit ihr in Verbindung stehenden Bohrungen durch den
Flanschring ins Freie zu leiten, nicht in jedem Fall wirksam erfüllen.

Aufgabe der Erfindung ist nun die Schaffung eines Flanschs,
der gegenüber dem eingangs erwähnten in der Weise verbessert ist, daß ausreichend breite Dichtflächen zur Verfügung stehen, um das Entstehen einer Leckage an der durch
die Entlastungsnut unterteilten Dichtfläche und der damit
verbundenen Gefahr einer Vermischung von Produkt mit Heiz-
oder Kühlmedium mit Sicherheit zu vermeiden.

Zur Lösung dieser Aufgabe werden erfindungsgemäß bei einem
Flansch der eingangs genannten Gattung die im Anspruch 1
gekennzeichneten Merkmale vorgeschlagen.

Der erfindungsgemäße Flansch ist einfach im Aufbau, preiswert in der Herstellung und kann unter Zuhilfenahme gängiger Dichtungssysteme und mit normalem Aufwand montiert
werden. Darüberhinaus bietet er gegenüber vergleichbaren bekannten Flanschen den erheblichen Vorteil, daß die Breite
der Dichtfläche in allen Bereichen ausreichend groß ist, um
ein Leckwerden und dadurch bedingtes eventuelles Vermischen
von Produkt mit Heiz- oder Kühlmedizm zu verhindern.
Erreicht wird dies durch die besondere Gestaltung des Flanschrings und die gewählte Lage für die verschiedenen Bohrungen
im Flanschring. Die Dichtflächen sind dabei so breit, daß in
ihnen für höhere Beanspruchung, d.h. hoher Druck über etwa
16 atü und gegebenenfalls hohe Temperatur auf seiten des Heizmediums bzw. Vakuumbetrieb auf der Produktseite, sogar Nut-und
Federanordnung vorgesehen werden können.Die Durchtrittsöffnungen für das Heiz-oder Kühlmedium wurden in den äußeren Teilkreis für die Befestigungsschrauben und den dort gelegenen
äußeren Abschnitt der Dichtfläche gelegt. Weitere Befestigungsschrauben liegen auf einem konzentrischen inneren Teilkreis, auf dem auch die in die Entlastungsnut einmündenden ins Freie führenden Bohrungen liegen. Die auf dem inneren Teilkreis angeordneten Befestigungsschrauben unterstützen die Dichtung auf dem äußeren Abschnitt der Dichtfläche, bewirken zusätzlich aber auch noch eine Anpressung im Bereich des inneren Abschnitts der Dichtfläche, die von dem äußeren Abschnitt der Dichtfläche durch die Entlastungsnut getrennt ist. Durch eine einzige Packung können der innere und der äußere Abschnitt der Dichtfläche abgedeckt werden. Die Befestigungsschrauben auf beiden Teilkreisen sind zum Anziehen und Lösen mittels Schraubenschlüssel gut zugänglich. Sowohl die Entlastungsringnut als auch die in sie einmündenden ins Freie führenden Entlastungsbohrungen können so dimensioniert werden, daß es nicht zu Verstopfungen durch eingeflossenes und erhärtetes Produkt kommen kann, wie dies bei dem vorerwähnten bekannten Flansch leicht der Fall sein kann, weil dort infolge des Platzmangels nur sehr eng bemessene Entlastungsnut und -bohrungen vorgesehen werden können.

Auf der der Dichtfläche entgegengesetzten Seite des Flanschrings sind erfindungsgemäß Kanäle gebildet, um das Heiz- oder Kühlmedium aus dem Ringraum zwischen Innen- und Außenrohr der beheizten oder gekühlten Rohrleitung direkt durch die Flanschverbindung zu leiten. Die Kanäle sind durch preiswerte Schalen gebildet, die am Flanschring und an dem Außenrohrstutzen angeschweißt sind. Es ist jedoch auch möglich, die Schalen einstückig am Außenrohrstutzen durch Pressen anzuformen. Es ist dann nur noch eine Verschweißung der Schale am Flanschring notwendig. Dieses Anschweißen kann in einfacher Weise gleichzeitig mit dem Verschweißen des Außenrohrstutzens mit dem Flanschring, also in einem Arbeitsgang, erfolgen. Die Durchbrechungen

- 5 -

im Außenrohrstutzen können ausgeklinkt und die Durchtrittslöcher für das Heiz- oder Kühlmedium in dem Flanschring in einem Arbeitsgang mit den Löchern für die Befestigungsschrauben eingearbeitet werden. Dadurch ist der
Material- und Bearbeitungsaufwand für den erfindungsgemäßen Flansch niedrig.

Anhand des in der Zeichnung dargestellten Ausführungsbeispiels wird die Erfindung näher erläutert.

    Fig. 1   zeigt den Flansch im Längsschnitt,

    Fig. 2   in Draufsicht auf die Dichtfläche,

    Fig. 3   in Ansicht von der zur Dichtfläche rückwärtigen Fläche her.

An den Flanschring 1 ist der Innenrohrstutzen 2 angeformt
oder  angeschweißt, der vom Produkt durchströmt wird. Konzentrisch zu dem Innenrohrstutzen 2 ist der Außenrohrstutzen
3 an den Flanschring 1 angeschweißt. Zwischen Innen- und
Außenrohrstutzen 2,3 ist der Ringraum 4 gebildet, der in
Längsrichtung von Heiz- oder Kühlmedium durchströmt wird.

Um das Heiz- oder Kühlmedium aus dem Ringraum 4 in den
entsprechenden Ringraum des sich in axialer Richtung an
den Flanschring 1 anschließenden Rohrleitungsabschnitts,
einer Armatur oder eines Behälters oder eines Schauglases
zu überführen, sind in dem Flanschring 1 Durchtrittsöffnungen 5 in dem radial über den  Außenrohrstutzen 3 überstehenden Abschnitt des Flanschrings 1, etwa im Bereich
des Teilkreises 14 der Löcher 6 für den Durchtritt der Befestigungsschrauben 7 angeordnet. Ferner sind an dem am Flanschring 1 gelegenen Ende des Außenrohrstutzens 3
Durchbrechungen 8 vorgesehen, durch die Heiz- oder Kühlmedium aus dem Ringraum 4 in radialer Richtung nach außen
strömen kann.

Je eine in derselben Radialebene liegende Öffnung 5 und eine
Durchbrechung 8 werden unter Bildung eines Kanals 9 durch
eine am Außenrohrstutzen 3 und am Flanschring 1 angeschweißte Schale 1o abgedeckt. Durch den Kanal 9 gelangt
das Heiz- oder Kühlmedium aus dem Ringraum 4 zwischen Innen-
und Außenstutzen 2 bzw. 3 über die Durchtrittsöffnungen 5
im Flanschring 1 in den Heiz- oder Kühlmantel eines an
diesen angeschlossenen Rohrleitungsabschnitt, einer Armatur, eines Schauglases, Behälters oder dergleichen.

Die Dichtfläche 11 wird durch eine in sie eingearbeitete
Entlastungsringnut 13 in einen äußeren Abschnitt 11' und
in einen inneren Abschnitt 11'' zweigeteilt. Auf dem
äußeren Dichtabschnitt 11' liegen die Löcher 6 für den
Durchtritt der Befestigungsschrauben 7 entlang des Teilkreises 14. Konzentrisch zu diesem sind auf einem inneren
Teilkreis 14' im Bereich der Entlastungsringnut 13 Löcher
6' für den Durchtritt von weiteren Befestigungsschrauben
7' vorgesehen. In demselben Teilkreis 14' liegen die Entlastungsbohrungen 15, durch die aus dem Innenrohr 2 über
den leckgewordenen Dichtabschnitt 11'' in die Entlastungsnut 13 eingedrungenes Produkt bzw. nach Leckwerden des äußeren Dichtflächenabschnitts 11' eintretendes Heiz- oder Kühlmedium ins Freie
fließen kann.

Auf die Dichtfläche 11 kann eine Packung 16 aufgelegt
werden, die sowohl den äußeren Dichtflächenabschnitt 11'
wie auch den inneren Dichtflächenabschnitt 11'' abdeckt.
Durch Anziehen der Befestigungsschrauben 7 auf dem äußeren
Teilkreis 14 werden die Duchtrittsöffnungen 5 für Heiz-oder Kühlmedium abgedichtet. Beim Anziehen der Befestigungsschrauben 7' auf dem inneren Teilkreis 14' wird eine
dichtende Pressung sowohl auf den inneren Dichtflächenabschnitt 11'' als auch auf den äußeren Dichtflächenabschnitt 11' bewirkt. Da die Befestigungsschrauben 7, 7'
in die Nähe der kritischen abzudichtenden Bereiche, das
sind einmal die Durchtrittsöffnungen 5 und zum anderen die
Ränder der Entlastungsnut 13, gelegt sind, ist die Gefahr
der Vermischung von Produkt mit Heiz- oder Kühlmedium
wirksamer als bei bekannten Flanschen gebannt. Tritt eine
Leckage im äußeren Dichtflächenabschnitt 11' auf, so halten
die Befestigungsschrauben 7' den inneren Dichtflächenabschnitt 11'' dicht. Umgekehrt sichern die Befestigungsschrauben 7 auf dem äußeren Teilkreis 14 ein Dichthalten
um die Durchtrittsöffnungen 5 für Heiz- oder Kühlmedium,
wenn am inneren Dichtflächenabschnitt 11'' eine Leckage
auftritt.

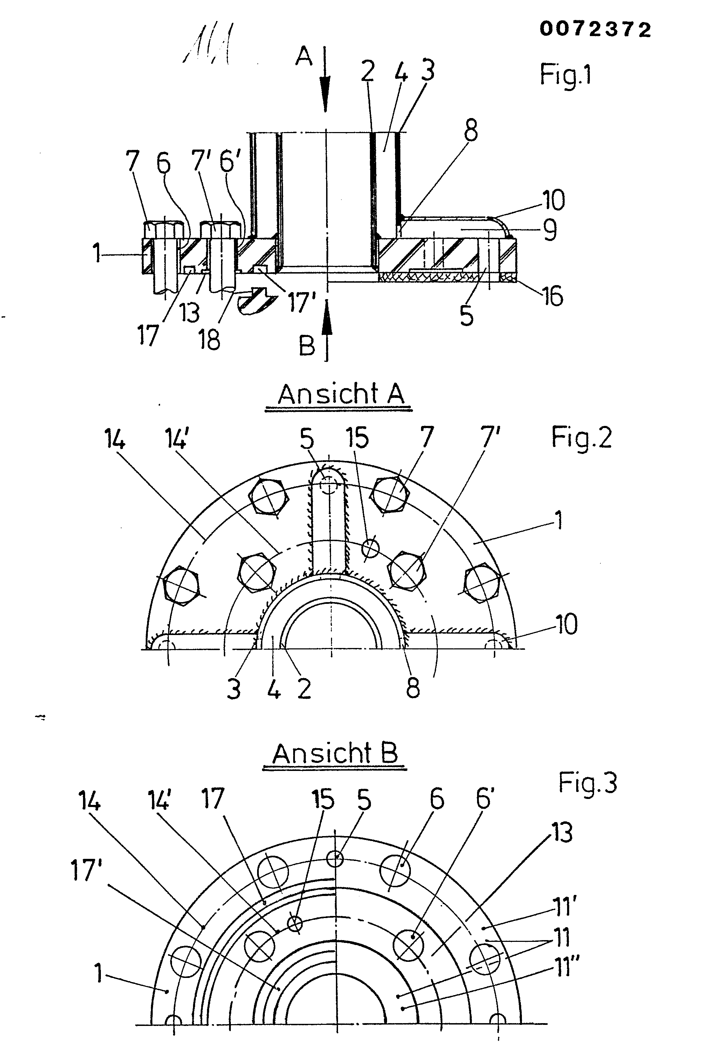

Wie aus dem linken Teil von Fig. 1 und Fig. 3 ersichtlich
ist, können in den Dichtflächen 11', 11" des Flanschrings
1 Nut- 17,17' und Feder- 18 Anordnung vorgesehen sein, wenn
höhere Beanspruchungen (Hochdruck bzw. Vakuumbetrieb)
dies erfordern.

COHAUSZ & FLORACK

PATENTANWALTSBÜRO

SCHUMANNSTR. 97 · D-4000 DÜSSELDORF

Telefon (02 11) 68 33 46          Telex: 0858 6513 cop d

PATENTANWALTE:

Dipl.-Ing. W. COHAUSZ  ·  Dipl.-Ing R. KNAUF  ·  Dipl.-Ing. H. B. COHAUSZ  ·  Dipl.-Ing. D. H. WERNER

- 8 -

Ansprüche:                    12.8.1981

1. Flansch für den Anschluß an beheizte oder gekühlte Rohrleitungen, Behälter, Armaturen, Schaugläser und dergleichen, bestehend aus einem mit einem Innenrohrstutzen und einem dazu konzentrischen Außenrohrstutzen verbundenen Flanschring mit auf einem Teilkreis angeordneten Löchern für den Durchtritt von Befestigungsschrauben und axialen Durchtrittsöffnungen für Heiz- oder Kühlmedium in dem über den Außenrohrstutzen radial nach außen vorstehenden Abschnitt des Flanschrings, wobei jede Durchtrittsöffnung mit einer in derselben Radialebene liegenden Durchbrechung in dem am Flanschring gelegenen Ende des Außenrohrstutzens unter Bildung eines auf der zur Dichtfläche rückwärtigen Fläche des Flanschrings gelegenen Kanals miteinander verbunden sind und wobei in die Dichtfläche des Flanschrings eine Entlastungsnut eingearbeitet ist, in die Bohrungen durch den Flanschring münden, d a d u r c h   g e k e n n z e i c h n e t, daß Löcher  (6,6') für Befestigungsschrauben (7,7') auf zwei konzentrischen Teilkreisen (14,14') angeordnet sind und die Durchtrittsöffnungen (5) für Heiz- oder Kühlmedium auf dem äußeren Teilkreis (14) und die Entlastungsnut (13) sowie die von ihr ausgehenden Bohrungen (15) durch den Flanschring (1) entlang des inneren Teilkreises (14') gelegen sind.

2. Flansch nach Anspruch 1, d a d u r c h   g e k e n n - z e i c h n e t, daß der Kanal (9) durch eine an die rückwärtige Fläche des Flanschrings (1) geschweißte Schale (10) gebildet ist.

3. Flansch nach Anspruch 2, d a d u r c h   g e k e n n - z e i c h n e t, daß die Schale (10) an ihrem äußeren Ende abgerundet ist.

4. Flansch nach Anspruch 2 oder 3, d a d u r c h   g e - k e n n z e i c h n e t, daß die Schale (10) an den Außenrohrstutzen ·(3) angeformt ist.

0072372

Fig.1

Ansicht A

Fig.2

Ansicht B

Fig.3

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>AT - B - 333 554</u> (SCHNELL RICHARD)<br>* Seite 2, Zeilen 55-60;<br>Seite 3, Zeilen 1-5 *<br>--<br><u>DE - A1 - 2 806 312</u> (SCHULZ)<br>* Gesamt *<br>----- | 1 |
| A | | |

**KLASSIFIKATION DER ANMELDUNG (Int. Cl.³)**

F 16 L 39/00
F 16 L 23/00

**RECHERCHIERTE SACHGEBIETE (Int. Cl.³)**

F 16 L 39/00
F 16 L 23/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsatze
E: alteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 08-03-1982 | SCHUGANICH |

EPA form 1503.1  06.78